# EUROPÄISCHE PATENTSCHRIFT

(11) **EP 3 824 742 B1**
(45) Veröffentlichungstag und Bekanntmachung des Hinweises auf die Patenterteilung: **08.11.2023**
(21) Anmeldenummer: 20206682.5
(22) Anmeldetag: 10.11.2020
(51) Int. Cl.: A23L 31/00, A01G 18/20, A01G 18/22

(54) **VERFAHREN UND ANLAGE ZUR KONTINUIERLICHEN PRODUKTION VON STERIL-SUBSTRAT FÜR DIE FESTSTOFF-FERMENTATION MIT PILZEN**
PROCESS AND SYSTEM FOR CONTINUOUS PRODUCTION OF STERILE SUBSTRATE FOR SOLID-STATE FERMENTATION WITH MUSHROOMS
PROCÉDÉ ET SYSTÈME POUR LA PRODUCTION CONTINUE DE SUBSTRAT STÉRILE POUR LA FERMENTATION EN SUBSTRAT SOLIDE AVEC DES CHAMPIGNONS

(30) Priorität: 22.11.2019 DE 102019131659
(43) Veröffentlichungstag der Anmeldung: 26.05.2021
(73) Patentinhaber: Vogel, Ullrich Felix, 65207 Wiesbaden (DE)
(72) Erfinder: Vogel, Ullrich Felix, 65207 Wiesbaden (DE)

(56) Entgegenhaltungen:
- EP-A1- 0 075 614
- DE-C2- 3 618 894
- US-A1- 2014 173 977
- US-B2- 10 172 301

## Beschreibung

Die Erfindung betrifft ein kontinuierliches Verfahren zur Herstellung von Lignocellulose enthaltenden sterilen Substraten für die Pilzproduktion ("Pilzzucht") sowie ein System zur Durchführung des Verfahrens.

Lignocellulosehaltige Nebenprodukte (Rohstoffe) aus Land- und Forstwirtschaft, wie Stroh von Getreide-, Öl-, Faserpflanzen oder Hülsenfrüchten und Reststoffe aus der Holzverarbeitung, wie Sägemehl, Sägespäne sowie Reststoffe aus Produktionslinien pflanzlicher Rohstoffe (Nussschalen, Steine aus Steinfrüchten), finden weltweit immer häufiger Verwendung zur Produktion von Pilznährböden (Pilzsubstraten) zur Erzeugung von Pilzmyzel sowie deren Fruchtköper von saprotroph lebenden Pilzen aus dem Unterreich der Dikarya, aus der Abteilung der Basidiomycota (Ständerpilze) und Ascomycota (Schlauchpilze).

Während der extensive Anbau, wie die jahrtausendalte Methode der Holzstammkultur mit Shiitake (Lentinus edodes), die vor allem in Ostasien praktiziert wurde und wird, wenig hygienische Maßnahmen erfordert, ist diese Methode kaum geeignet für die intensive Produktion der in Kultur genommenen Edelpilze, insbesondere der saprotrophen Edelpilze, wie: Pleurotus sp.; Lentinus edodes; Pholiota nameko; Agrocybe aegerita; Flammulina velutipes; Hypsizygus tessulatus; Volvariella volvacea; Ganoderma lucidum; Grifola frondosa; Hericium erinaceus; Sparrasis crispa; Morchella esculenta.

Eine Sterilisation des Nährsubstrates ist notwendig, andernfalls können sich unerwünschte konkurrierende Mikroorganismen (wie Trichoderma sp. oder Neurospora sp.) auf den Holz- und Strohsubstraten gegenüber dem Kulturpilz durchsetzen.

Bei ertragreichen, oft mit organischen Ergänzungsnährstoffen, wie Weizenkleie oder Baumwollsaatschrot, angereicherten Pilzsubstraten ist Sterilisation besonders notwendig.

Die Sterilisation und Inokulation der Nährböden erfolgt bis jetzt in Batch- oder Chargenverfahren, d.h. in diskontinuierlichen Verfahren. Hier sind im Wesentlichen zwei Varianten von Bedeutung, beschrieben beispielsweise in der Publikation von P. Oei, Mushroom-Cultivation IV; ECO Amsterdam [2016] Seite 321 - 353: In der ersten Variante erfolgt das Sterilisieren im Stand-Autoklav bei 121 °C / 2 bar. Alternativ kann auch bei niedrigeren Temperaturen (110 °C / 1,43 bar) sterilisiert werden, wobei das Substrat dann jedoch länger bei dieser Temperatur gehalten werden muss. Der Substratrohstoff wird vor dem Autoklavieren in spezielle hitzeresistente Kulturbehältnisse abgefüllt, z.B. in eine Polypropylen-Folie mit keimdichtem Filter. Nach dem Autoklavieren wird das Substrat abgekühlt und dann mit Reinkultur des Pilzes beimpft. Die Inokulation mit Reinkultur erfolgt immer in steriler Arbeitsumgebung, z.B. auf einer Clean-Bench.

Das Inokulat kann von unterschiedlicher Konsistenz sein, z.B. Körnerbrut (Hirse/Roggen), ein mit Mycel der Reinkultur durchwachsener Holzstab oder eine Flüssigbrut. Das Beimpfen wird manuell durchgeführt.

In der zweiten Variante erfolgt das Sterilisieren in einem Bulkverfahren. Hier werden die Verfahrensschritte Mischen, Befeuchten, Sterilisieren, Abkühlen, Inokulieren und Abfüllen der Substrat-Rohstoffe in Kulturbehältnisse in einem Apparat zusammengefasst. Die sechs Verfahrensschritte werden in einem Apparat nacheinander abgearbeitet, um dann mit neuem Substrat von vorn zu beginnen (erweitertes Chargenverfahren).

Aus der EP 0 075 614 A1 ist zudem ein Verfahren und eine Vorrichtung zur selektiven Gewinnung von Mycelien und Fruchtkörpern von Basidiomyceten, die Verwendung der Myceten und eine Vorrichtung zur Durchführung des Verfahrens bekannt. In dem Verfahren wird die Keimreduzierung (Sterilisation) des Substratrohstoffs ohne Verpackung in dünner Schicht kontinuierlich oder diskontinuierlich durchgeführt. Dabei wird das Substrat umgewälzt und mit Dampf bei 128 °C für etwa 3 Minuten beaufschlagt. Anschließend wird innerhalb von 3 Minuten abgekühlt.

Gegenstand der US 10 172 301 B2 sind Schiffscontainer, die für die Produktion von Pilzen umgerüstet sind. In den Containern sind u.a. Behälter mit pasteurisiertem Substrat, z.B. Stroh, Holzspäne, Sägemehl oder ähnliches, für die Anzucht der Pilze vorgesehen. Zur Pasteurisierung wird das Substrat mit Wasser vermischt und erwärmt, beispielsweise auf 160 bis 180 °F. Nach Abkühlen und Entfernen von überschüssigem Wasser wird das so behandelte Substrat portionsweise verpackt und mit Reinkulturen eines Pilzes inokuliert. In dem Verfahren gemäß der EP 0 483 655 A2 werden Pilze auf einem Lignocellulose enthaltenden Substrat gezüchtet. Das Substrat wird vor der Inokulation zur Konditionierung für einen Zeitraum von 1 bis 3 Minuten in 50 bis 70 °C warmes Wasser eingetaucht. Auf ein Pasteurisierungs- oder Sterilisierungsverfahren wird verzichtet. In der CH 553 532 ist ein Verfahren zur Herstellung eines Substrats für die Zucht von Speisepilzen, beispielsweise von Pleurotus ostreatus oder von Champignons, offenbart. Als Substrat wird eine cellulosehaltige Substanz eingesetzt, die mindestens 50 % Wasser enthält und bei Atmosphärendruck unter aeroben Verhältnissen in Gegenwart thermophiler Mikroorganismen bei einer Temperatur von maximal 70 °C aufgeschlossen wurde. Aus der US 2014/0173977 A1 ist ein weiteres Verfahren zur Herstellung eines Substrats zur Pilzzucht bekannt. In dem Verfahren wird eine Lignocellulose enthaltende Biomasse, z.B. Holzspäne, auf bekannte Weise aufgeschlossen, z.B. durch Einwirkung von Wasserdampf oder von konzentrierter oder verdünnten Säure. Bei dem Abbau etwa entstandene C5-Kohlenwasserstoffe werden entfernt und der Feuchtegehalt der Biomasse wird eingestellt, z.B. durch Hinzufügen oder Abpressen von Wasser. Nach dem Sterilisieren werden dem Substrat das Pilzwachstum fördernde Komponenten, z.B. Mineralien oder Proteine, zugesetzt. Anschließend wird das Substrat mit den gewünschten Pilzkulturen inokuliert.

Bisher ist das Chargen- oder Batchverfahren immer noch Stand der Technik beim Sterilisieren und Inokulieren von Pilzsubstraten. Das in der genannten EP-Patentanmeldung beschriebene (kontinuierliche) Verfahren konnte nicht zur Marktreife geführt werden, obwohl ein kontinuierliches Verfahren im Allgemeinen als die kostengünstigere Variante gegenüber dem Batchverfahren gilt. - Die Hersteller von Pilzsubstraten wünschen sich niedrigere Arbeits-, Energie- und Materialkosten sowie automatisierte Verfahren bei der Pilz- und Pilzsubstratproduktion. Weltweit setzt sich zudem eine fleischärmere, vegetarische und vegane Ernährungsweise durch, zu der auch die Ernährung mit Pilzen zählt.

Es bestand daher nach wie vor die Aufgabe, das aus der EP 0 075 614 A1 bekannte Verfahren so zu verbessern, dass sich damit Lignocellulose enthaltende sterile Pilzsubstrate auch in größeren Mengen (mehr als 100 Tonnen jährlich) wirtschaftlich herstellen lassen.

Gelöst wird die Aufgabe durch ein Verfahren mit den folgenden Schritten:

### 1. Zerkleinern, Sieben, Lagern, Mischen und Fördern der Substratrohstoffe

Zunächst wird der Substratrohstoff zerkleinert. Als Rohstoff eignet sich beispielsweise unbehandeltes Stroh aus der Getreideproduktion, daneben auch Reste aus Ölpflanzen, Faserpflanzen oder Hülsenfrüchten. Je nach Anspruch des zu kultivierenden Edelpilzes lassen sich auch Reststoffe aus der Holzverarbeitung, wie Holzspäne oder Holzmehl bestimmter Baumgattungen bzw. Baumarten, wie Eiche, Buche, Esche, Erle, Weide oder Pappel als Ausgangsmaterial verwenden. Diese können mit zerkleinertem Stroh kombiniert sein oder ausschließlich eingesetzt werden. Die mittlere Korngröße (Länge, Durchmesser) des zerkleinerten Substratrohstoffs (Haufwerk) beträgt 10mm (für Stroh) und bis zu 1 mm (für Holzmehle). Durch Klassierung mit Hilfe von Sieben wird Grobgut aus dem Haufwerk abgetrennt und einem erneuten Zerkleinerungsvorgang zugeführt. Die Mischungsverhältnisse der verschiedenen Rohstoffe sind abhängig vom Anspruch des zu kultivierenden Pilzes. Die Rohstoffe (Strohhäcksel und Holzspäne) sollten getrennt gelagert werden. Misch- und Fördereinrichtung führen die Rohstoffe dann dem nächsten Verfahrensschritt zu.

### 2. Konditionieren der Substratrohstoffe

In einem Behälter wird das auf dem Rohstoff fast immer befindliche autochthone Mikrobiom (Pilz- und/oder Bakteriensporen) aktiviert. In diesem Schritt wird die Keimruhe des Mikrobioms aufgehoben. Dazu werden die Substratrohstoffe in einem beheizbaren Durchlaufbehälter mit Wasser versetzt, so dass eine Mischung mit einem Feststoffanteil von 40 - 75 Gew.-% resultiert, bezogen auf das Gesamtgewicht der Mischung. Die Temperatur des Gemisches wird auf 30 bis 50 °C eingestellt. Die mittlere Aufenthalts- bzw. Durchlaufzeit in dem Behälter beträgt drei Stunden oder mehr. Das aus dem Substrat entweichende metabole CO₂ und Wärme wird durch einen Ventilator umgewälzt, dadurch entstehen keine anaeroben Zonen in der Gasphase des Haufwerks. Anschließend wird Substratrohstoff zum nächsten Verfahren gefördert.

### 3. Suspendieren, Zerkleinern und Fördern der Substratrohstoffe

In einem Behälter (Suspensionsbehälter) wird der Substratrohstoff durch den Zusatz von weiterem Wasser suspendiert. Es wird eine Suspension bzw. Pulpe oder Aufschlämmung erhalten wie sie in ähnlicher Form auch aus der Papierherstellung bekannt ist. Der Feststoffanteil in der Suspension wird auf 5 bis 15 Gew.-% eingestellt. Die Dispersions- phase besteht zum Großteil aus dem Filtrat des nachfolgenden Verfahrensschritts 5, sowie Anteilen aus dem Kondensat und/oder dem Kühlwasser aus dem Verfahrensschritt 6 und einem kleinen Anteil an Wasser aus dem oben genannten Verfahrensschritt 2. Die mittlere Durchlaufzeit für diesen Schritt beträgt fünfzehn bis dreißig Minuten. Mit Hilfe von Pumpen oder anderen Fördereinrichtungen wird die Suspension dann einem kontinuierlichen Sterilisationsprozess zugeführt.

Die Auswahl der Pumpen erfolgt nach ingenieurtechnischen Kriterien (Volumenstrom, Druckverluste in den nachfolgenden Einzelapparaten des nachfolgenden Verfahrensschritts 4, Viskosität etc.). Der Substratrohstoff wird, bevor er durch den Sterilisationsapparat gepumpt wird, einem weiteren Zerkleinerungsschritt unterzogen. Seine Oberfläche vergrößert sich dadurch zusätzlich. Bei der Herstellung der Suspension wird der Substratrohstoff mit Wasser völlig durchtränkt und gequollen. Gaseinschlüsse werden verdrängt. Weiterhin werden die in dem Verfahrensschritt 2 gekeimten Sporen einer ersten Denaturierung, einer Art Hoch-Temperatur-Pasteurisation, unterzogen. Die Suspension erleichtert wesentlich die Wärmerückgewinnung, wie in den Verfahrensschritten 4 und 5 beschrieben. Die Schlempe im Behälter wird auf 70 bis 99 °C vorgewärmt. Die Wärme wird einerseits über die Rückführung des warmen Filtrats aus dem Verfahrensschritt 5, sowie aus Kondensat- und Kühlwasseranteilen aus dem Verfahrensschritt 6 zurückgewonnen. In einem zweiten Warmwasserbehälter werden Kondensat und Kühlwasser auf 99 °C erwärmt. Der Suspensions-Behälter wird zusätzlich über die Mantelfläche temperiert. Die Pulpe am Boden des Behälters unterliegt dem statischen Druck/Füllstand der Suspension. Über einen Wrasen-Kondensator und einen Filter erfährt der Gasraum des Suspensionsbehälters einen Druckausgleich zur Raumluft/Außenluft.

### 4. Sterilisation (Wärmebehandeln)

Die Wärmebehandlung des suspendierten Substratrohstoffs erfolgt in einem kontinuierlichen Durchlauf unter Erwärmung auf 100 bis 110 °C bei einem Druck von vorzugsweise etwa 1,43 bar über einen Zeitraum von fünfzehn bis dreißig Minuten. Er dient der wirtschaftlichen Abtötung des Mikrobioms, also aller lebensfähigen Vegetativ- und/oder Dauerformen von konkurrierenden Pilzen, beispielsweise von Trichoderma sp. oder Neurospora sp. und der Inaktivierung von Bakterien (z.B. Bacillus subtilis), die sich gegebenenfalls auf oder in dem Substratrohstoff befinden.

Die Behältervolumina sind gemäß der Druckgeräterichtlinie (DGRL) 2014/68/EU bei einem Druck von weniger als 1,43 bar nicht limitiert. Die Vorrichtung zur Sterilisation besteht aus zwei Doppelrohrapparaten mit einem Druckbehälter im Mittelteil. Die Suspension wird im Mantelrohr ("kalte Seite") des Doppelrohrapparats 1 vom Rückfluss im Kernrohr ("warme Seite") vorgewärmt. Der Doppelrohrapparat 1 kann im Mantelrohr und im Kernrohr zusätzlich durch einen Schneckenwendelgang ausgerüstet sein. Die Suspension erfährt dadurch einen besseren Wärmeübergang.

Im Betriebspunkt, bei guter technischer Auslegung des Doppelrohrapparats1 kann ein Wirkungsgrad der Wärmerückgewinnung von 75 bis 90 % erreicht werden. Die Wärmetauscherflächen werden dabei durch die Scheuerwirkung der Silikate der Lignocellulose blank gehalten. Ein Fouling an den Oberflächen des Durchlauf-Sterilisators wird somit verhindert.

Alternativ zu dem Doppelrohrapparat kann ein Spiralwärmetauscher für die Vorwärmung, respektive Rückkühlung Einsatz finden.

Im Mittelteil, getrennt vom Doppelrohrapparat 1 befindet sich ein separater Druckbehälter. In diesem Behälter wird das Substrat etwa 15 bis 30 min bei 110 °C gehalten. Dies reicht aus für eine erfolgreiche Sterilisation von Nähr-Substrat für das Wachstum oben erwähnter Basidiomyceten.

Rohrleitungen verbinden den Doppelrohrapparat 1 und den Druckbehälter mit einem weiteren Doppelrohrapparat. Dieser Doppelrohrapparat 2 hat die Aufgabe die bis 110 °C fehlende Wärme auf die Suspension zu übertragen. Dabei fließt die Suspension im Kernrohr gegenläufig zu dem wärmeabgebenden Medium (Dampf oder Heißwasser) im Außenrohr.

Apparate (Druckbehälter und Rohrleitungen) zur kontinuierlichen Sterilisation von suspendiertem Substratrohstoff, die bei einer Temperatur von 110 °C oder mehr und einem Druck von mehr als 1,43 bar betrieben werden, tangieren die DGRL und müssen für Inbetriebnahme und Betrieb zertifiziert sein. Diese Art der Vorrichtung wird notwendig um auch solche Keime zu beseitigen, die die Hitzebehandlung bis 110 °C bei einem Druck von 1,43 bar und entsprechender Einwirkzeit überstanden haben. Vor allem das Sterilisieren von Nährsubstraten, wie Getreide (Roggen Hirse, usw.) für das Vermehren von Pilz-Reinkulturen verlangt nach Temperaturen von 121 °C bei einem Druck von 2 bar und einer Haltezeit von 20 bis 30 Minuten.

### 5. Filtern und Scheidepressen

Die Suspension verlässt den Wärmetauscher mit einer Temperatur von weniger als 100 °C und bei Atmosphärendruck (1016 hPa). Ein Filter trennt die flüssige Phase vom Feststoff. Die vorgefilterte Schlempe wird anschließend in Filter-, Schneckenpresse oder Walzenpresse kontinuierlich weiter gefiltert und anschließend ausgepresst. Von 10 Teilen Wasser in der Suspension werden etwa 8 bis 9 Teile durch das Filtern und Auspressen entfernt. Das Substrat (Presskuchen) besteht dann zu 50 bis 70 Gew.-% aus Wasser und zu 50 bis 30 Gew.-% aus Trockensubstanz. Das Filtrat wird in den Suspensions-Behälter (Schritt 3) zurückgespeist. Der im stationären Betrieb durch Filtermittel und Filterkuchen in das Filtrat ausgeschwemmte Feinstanteil der Lignocellulose wird erneut den Verfahrensschritten 3 und 4 zugeführt. Dadurch erhöht sich die Viskosität der Suspension leicht.

### 6. Kühlen und Trocknen

Dem warmen Steril-Substrat wird in diesem Schritt Wärme und weiteres Wasser entzogen. Am wirksamsten wird dies durch Siede- /Verdampfungskühlung erreicht. In einem Grobvakuum bei einem Druck von 20 bis 100 mbar wird das Steril-Substrat auf 28 - 40 °C gekühlt und bis zu einer Feuchte von 45- 55 Gew.-% getrocknet. Die dem Steril-Substrat von der Verdampfungsenthalpie entzogenen Wärme wird mit einem Kondensator zurückgewonnen, der der Vakuumpumpe vorgeschaltet ist. Das Vakuumverfahren ist ebenfalls kontinuierlich gestaltet. Hierzu werden auf der Substrateingangsseite und der Ausgangseite kontinuierlich sich bildende Druckpfropfen aus Substratmaterial eingesetzt. Wird die Leckrate trotz der Abdichtung durch die Druckpfropfen zu hoch, dann müssen zwei abwechselnd betriebene Vakuumbehälter zum Einsatz kommen, die durch Ventile gegeneinander und auf der Eingangs- bzw. Ausgangsseite abgedichtet werden. Der bzw. die Vakuumbehälter ist/sind als Pufferspeicher ausgeführt.

### 7. Inokulieren, Dossieren und Mischen

Im Durchlauf wird das Steril-Substrat in diesem Schritt mit Wasser, Brut/Pilz-Reinkultur und ggf. Zuschlägen (z.B.: Kalzium-, Magnesium-, Mangansalze) versetzt und durchmischt. Die Temperatur des beimpften Steril-Substrates beträgt danach 20 bis 28 °C. Der Wassergehalt des Steril-Substrates wird in Abhängigkeit vom verwendeten Kulturpilz auf 55 bis 69 Gew.-% eingestellt.

### 8. Abpacken/Stapeln/Fördern

Das beimpfte Steril-Substrat wird in Form gebracht und in biologisch abbaubarer Folie oder ähnlichem Verpackungsmaterial abgepackt. Die Verpackung hat zweckmäßig eine Mikrometer-Perforation. Das inokulierte Steril-Substrat tritt nur kurz mit der Packraum-Luft in Kontakt, hier kommt beispielsweise eine Laminarflow-Vorrichtung mit HEPA-Filter als Schutz vor Kontamination zum Einsatz.

Die Steril-Substrate werden von einem Handhabungsautomaten in Etageren/Fahrregalen abgelegt und gestapelt. Ein Transportautomat bringt die Etageren in die Fermentationsräume.

### 9. Mycel-Wachstum/Feststoff-Fermentation

Der enzymatische Aufschluss des Substrats, auch bezeichnet als "aerobe Feststoff-Fermentation", durch den jeweiligen Kulturpilz mit seinen spezifischen Enzymen, z.B. Cellulasen, Laccasen und Hemicellulasen wird in vollklimatisierten Räumen vorgenommen. Die für das Durchwachsen des Sterilsubstrats mit Pilzmycel erforderliche Zeitspanne ist abhängig von der Art des Kulturpilzes, der Geometrie, der Struktur und Zusammensetzung des Substrates, sowie vom Klima (Temperatur, relative Feuchte, Strömungsgeschwindigkeit am Substratkörper), Gaszusammensetzung und natürlich des Maturitäts- oder Wachstumsstadiums des Mycels.

Die Hauptführungsgröße für die Mess- und Regeltechnik zur Regelung der Raum-Temperatur ist die Temperatur des Substratkerns im Sterilsubstrat-Paket. Diese Substrat-Kern-Temperatur soll zwischen 22 und 28 °C liegen. Die Prozessluft führt die metabole Wärme und das entstandene CO₂ ab. In der exponentiellen Wachstumsphase des Mycels soll der Sauerstoffpartialdruck nicht unter 0,18 bar absinken, d.h. es soll ein CO₂ -Gehalt von 1.000 bis 30.000 ppm in der Prozessabluft vorhanden sein. Die relative Feuchte der Raumluft soll zwischen 88 und 99 % liegen. Der Raumnutzungsgrad liegt zwischen 0,3 und 0,9 (Substratvolumen dividiert durch Raumvolumen).

Die Prozessluft wird wie folgt behandelt:
Außenluft ansaugen; Grob- und Feinfiltern; Fördern; Heizen; Kühlen; Befeuchten; Mischen; Zuluft; Schwebstoff-Filter als Quelllufteintrittsöffnung in den Fermentationsraum: Abluft; Umluft; regenerative Wärmerückgewinnung (Wärme und Feuchte); Fortluft.

Die Prozessluftzustände werden für jeden Fermentationsraum separat geregelt.

Der Vollständigkeit halber soll hier noch ein Verfahrensschritt 10 Erwähnung finden:
10. Verwendungen des durchwachsenen Substrates:
- Fruchtkörperproduktion und deren Verarbeitungen (frisch, gefroren, getrocknet, etc.);
- Extraktion von Inhaltsstoffen aus frischen oder abgeernteten Substrat, respektive aus Fruchtkörpern, wie:
- Polysaccharide; - Enzyme; - Aromen; - Farbstoffe; - Indolderivate; etc. sowie Verwendungen des abgeernteten Pilzsubstrates, in der Umwelttechnologie, wie z.B.:
- Remediation von mit persistenten polyzyklischen Aromaten kontaminierten Böden und Feststoffen;

Sonstige Verwendung des abgeernteten Substrates, z.B.:
- Biogassubstrat;
- Bodensubstrat;
- Nahrung für Insektenzucht;
- Nahrung für Schneckenzucht;
- Nahrung für Wiederkäuer

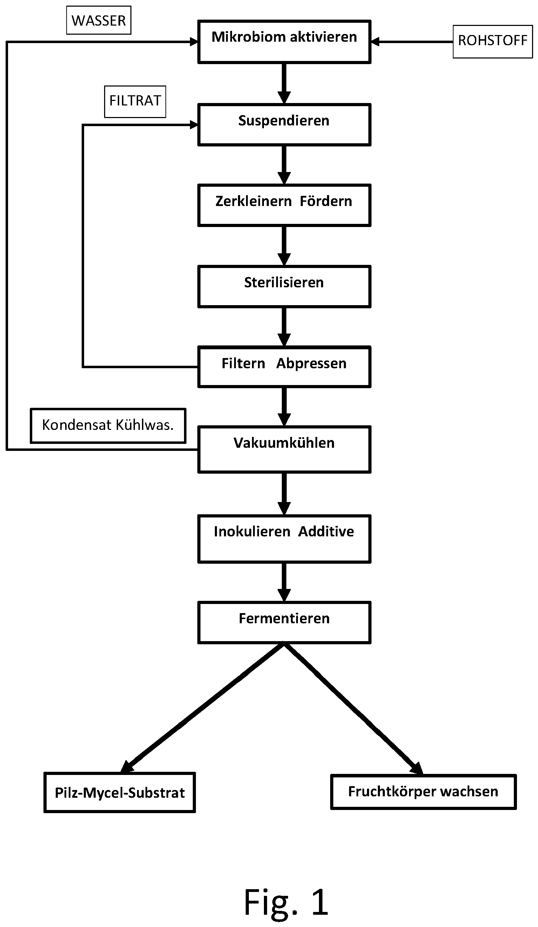

In der Fig. 1 sind die einzelnen Stufen des Verfahrens schematisch dargestellt.

Gegenstand der Erfindung ist somit ein kontinuierliches Verfahren zur Herstellung von Steril-Substrat für die Feststofffermentation mit Pilzen mit den Schritten:
a) Bereitstellen eines pflanzlichen Rohstoffs, der zu mindestens 40 Gew.-%, bezogen auf sein Trockengewicht, aus Lignocellulose und Hemicellulose besteht, wobei der Rohstoff aus Partikeln mit einer mittleren Größe von weniger als 10 mm gebildet ist,
b) Vermischen des pflanzlichen Rohstoffs mit Wasser zu einer Masse mit einem Feststoffanteil von 40 bis 75 Gew.-%,
c) Erwärmen und Durchmischen der wasserhaltigen Masse aus Schritt b) über mindestens 3 Stunden bei einer Temperatur von 30 bis 50 °C um auf dem Substrat vorhandenes Mikrobiom zu aktivieren,
d) Vermischen des in Schritt c) erhaltenen Substrats mit Wasser zu einer Suspension mit einem Feststoffanteil von 5 bis 15 Gew.-%,
e) Erhitzen der Suspension aus Schritt d) auf eine Temperatur von 70 bis 99 °C bei Atmosphärendruck für eine Zeitspanne von 5 bis 60 min um den Feststoff/Rohstoff in der Suspension zu konditionieren, zu quellen und zu pasteurisieren,
f) die Suspension aus Schritt e) wird anschließend einem Zerkleinerungs- und mechanischem Aufschlussverfahren unterzogen und durch zwei Doppelrohrapparate und einen Druckbehälter gepumpt,
g) Erhitzen der Suspension aus Schritt f) im Durchlaufverfahren auf 100 bis 121 °C bei bis zu 2 bar Druck, Halten bei diesen Bedingungen für 10 bis 30 Minuten, anschließend Rückkühlen im Gegenstrom auf unter 100 °C,
h) Abtrennen des Wassers aus der rückgekühlten Suspension mit einer kontinuierlich arbeitenden Filtervorrichtung, wobei ein Steril-Substrat mit einem Feststoffanteil von 30 bis 50 Gew.-% erhalten wird und Zurückführen des in Schritt g) abgetrennten Wassers in Schritt d),
i) Verdampfen von Wasser aus dem in Schritt h) erhaltenen Substrat bei einem verminderten Druck von 20 bis 100 mbar bis das Substrat einen Wasseranteil von 45 bis 55 Gew.-% aufweist, bezogen auf das Gesamtgewicht des Substrats,
j) Inokulieren des in Schritt i) erhaltenen Steril-Substrats mit Pilz-Reinkulturen, gegebenenfalls Hinzufügen von Additiven zur Förderung des Pilzwachstums, Abkühlen des Substrates mit Wasser auf 25 °C oder weniger und Einstellen des Wassergehalts im Substrat auf 56 bis 69%,
k) Portionieren und Verpacken des inokulierten Substrats und Verbringen in Durchwachsräume, und
l) Fermentieren bei einer Substratkerntemperatur von 22-28 °C oder weniger, einer relativen Luftfeuchte von mindestens 88% und einem CO₂ - Partialdruck im Raum von maximal 0,03 bar.

Als pflanzlicher Rohstoff wird vorzugsweise gehäckseltes Stroh, Sägemehl, Holzspäne, zerkleinerte Baumrinde, zerkleinerte Maisspindeln, Getreidespelzen und/oder ein anderer pflanzlicher Rohstoff mit einem entsprechenden Anteil an Lignocellulose und Hemicellulose eingesetzt.

Im Schritt e) wird die Suspension vorzugsweise bei einer Temperatur von 70 bis 99 °C, besonders bevorzugt 85 bis 95 °C, über eine Zeitspanne von etwa 10 bis 30 min konditioniert.

In Schritt j) werden als Nährsalze bevorzugt MnSO₄, und/oder pH-Puffersubstanzen, besonders bevorzugt CaMg(CO₃)₂, eingesetzt.

In Schritt i) wird vorzugsweise ein mit Mycel der Pilz-Reinkultur durchwachsener Holzstab, eine auf Getreide befindliche Pilz-Reinkultur (Hirse, Roggen o.ä.) oder eine wässrige Suspension der Pilz-Reinkultur eingesetzt.

Es können zwei oder mehr der genannten bevorzugten Ausführungsformen miteinander kombiniert sein. Gleiches gilt für das nachfolgend beschriebene System zur Durchführung des Verfahrens.

Das System zur Durchführung des erfindungsgemäßen Verfahrens umfasst
a) einen beheizbaren Behälter, ausgelegt zum Vermischen des pflanzlichen Rohstoffs mit Wasser um auf dem Rohstoff befibdliches Mikrobiom zu aktivieren,
b) einen beheizbaren Behälter zum Suspendieren des pflanzlichen Rohstoffs mit aktiviertem Mikrobiom in Wasser,
c) einen beheizbaren Behälter, ausgelegt für einen Betriebsdruck von 2 bar, zur Sterilisierung der Suspension,
d) einen Filter mit Scheidepresse zum kontinuierlichen Abtrennen von Wasser,
f) eine Vorrichtung zum Zurückführen des Filtrats in den Behälter b) zum Suspendieren des pflanzlichen Rohstoffs,
g) mindestens eine kontinuierlich arbeitende Vorrichtung zum Abziehen von weiterem Wasser unter vermindertem Druck, sowie ein Kondensator mit Vakuumpumpe und ein/zwei vakuumfeste(r) Behälter, der/die als Pufferspeicher ausgeführt wird/werden,
h) eine Vorrichtung zum Inokulieren des aus der Vorrichtung g) geförderten Steril-Substrates mit Pilz-Reinkulturen und gegebenenfalls Hinzufügen von Additiven zur Förderung des Pilzwachstums und eine Dosier-Vorrichtung für Wasser um einen Wassergehalt des Substrats von 56 bis 69 Gew.-%, vorzugsweise von 58 bis 65 Gew.-%, im Steril-Substrat zu erreichen,
i) eine Vorrichtung zum Portionieren und Verpacken des mit den Pilz-Reinkulturen inokulierten Steril-Substrates in keimfreier Umgebung,
j) Fermentationsräume mit einer prozesslufttechnischen Anlage für das vegetative Wachstum des Pilzes im Steril-Substrat.

Der Behälter zur Sterilisierung des pflanzlichen Rohstoffs umfasst vorzugsweise einen ersten Doppelrohr-Apparat zu Rückkühlzwecken und einen zweiten Doppelrohr-Apparat zur weiteren Temperatureinleitung auf Sterilisationsniveau, sowie einen beheizbaren Druckbehälter für die Haltezeit.

Der Filter zum kontinuierlichen Abtrennen von Wasser (Vorrichtung e)) ist vorzugsweise eine Filter-, Schnecken- oder Walzenpresse oder ein Druckdrehfilter. Das gesamte System ist vorzugsweise durch eine Prozessleittechnik automatisiert.

Die mit der Erfindung erzielbaren Vorteile liegen insbesondere in der:
- Einsparung von Arbeitszeit

Erste Abschätzungen zwischen einem Chargenbetrieb mit 12.000 Tonnen Substrat pro Jahr und einem konzipierten Betrieb mit kontinuierlicher Fahrweise gleicher Jahresleistung konnten Einsparungen im Bereich Arbeitszeit von mehr als 50 % gezeigt werden.
- Energie- und Produktions-Raumeinsparung

im Bereich Sterilisieren konnte gegenüber dem Chargenverfahren eine Energieeinsparung von 50 % und mehr durch Wärmerückgewinnung und Rückspeisung gerechnet werden. Die Produktions-Raumersparnis im Bereich Abkühlraum nach dem Autoklavieren ist größer 99 %.
- Materialeinsparung bei Anlagenbau und -betrieb

In der Substratproduktion wird zudem weniger und bioabbaubare Substratfolie benötigt.

Durch Modulbauweise der gesamten Anlage können über 90% der gesamten Anlage zentral vorgefertigt werden. Um eine durchgängig kontinuierliche Fahrweise zu erreichen, ist eine redundante Ausführung der häufigen Service-Intervallen unterliegenden Apparate und Baugruppen notwendig.

Die Anlage erhält eine Prozessleittechnik um den vollautomatischen Betrieb zu gewährleisten.

Die erreichbaren Kosteneinsparungen gegenüber konventionell errichteten Edelpilz - Substrat-Kultur-Anlagen sind geschätzt 20 % und mehr.

Erste ökonomische Schätzungen ermöglichen dem Betreiber gegenüber dem herkömmlichen Chargenbetrieb eine Einsparung bei den Selbstkosten von 40 % und mehr.

## Patentansprüche

1. Kontinuierliches Verfahren zur Herstellung von Steril-Substrat für die Feststofffermentation mit Pilzen mit den Schritten:
a) Bereitstellen eines pflanzlichen Rohstoffs, der zu mindestens 40 Gew.-%, bezogen auf sein Trockengewicht, aus Lignocellulose und Hemicellulose besteht, wobei der Rohstoff aus Partikeln mit einer mittleren Größe von weniger als 10 mm gebildet ist,
b) Vermischen des pflanzlichen Rohstoffs mit Wasser zu einer Masse mit einem Feststoffanteil von 40 bis 75 Gew.-%,
c) Erwärmen und Durchmischen der wasserhaltigen Masse aus Schritt b) über mindestens 3 Stunden bei einer Temperatur von 30 bis 50 °C um auf dem Substrat vorhandenes Mikrobiom zu aktivieren,
d) Vermischen des in Schritt c) erhaltenen Substrats mit Wasser zu einer Suspension mit einem Feststoffanteil von 5 bis 15 Gew.-%,
e) Erhitzen der Suspension aus Schritt d) auf eine Temperatur von 70 bis 99 °C bei Atmosphärendruck für eine Zeitspanne von 5 bis 60 min um den Feststoff/Rohstoff in der Suspension zu konditionieren, zu quellen und zu pasteurisieren,
f) die Suspension aus Schritt e) wird anschließend einem Zerkleinerungs- und mechanischem Aufschlussverfahren unterzogen und durch zwei Doppelrohrapparate und einen Druckbehälter gepumpt,
g) Erhitzen der Suspension aus Schritt f) im Durchlaufverfahren auf 100 bis 121 °C bei bis zu 2 bar Druck, Halten bei diesen Bedingungen für 10 bis 30 Minuten, dann Rückkühlen im Gegenstrom auf unter 100 °C,
h) Abtrennen des Wassers aus der rückgekühlten Suspension mit einer kontinuierlich arbeitenden Filtervorrichtung, wobei ein Steril-Substrat mit einem Feststoffanteil von 30 bis 50 Gew.-% erhalten wird und Zurückführen des in Schritt g) abgetrennten Wassers in Schritt d),
i) Verdampfen von Wasser aus dem in Schritt h) erhaltenen Substrat bei einem verminderten Druck von 20 bis 100 mbar bis das Substrat einen Wasseranteil von 45 bis 55 Gew.-% aufweist, bezogen auf das Gesamtgewicht des Substrats,
j) Inokulieren des in Schritt i) erhaltenen Steril-Substrats mit Pilz-Reinkulturen, gegebenenfalls Hinzufügen von Additiven zur Förderung des Pilzwachstums, Abkühlen des Substrates mit Wasser auf 25 °C oder weniger und Einstellen des Wassergehalts im Substrat auf 56 bis 69 Gew.-%,
k) Portionieren und Verpacken des inokulierten Substrats und Verbringen in Durchwachsräume, und
l) Fermentieren bei einer Substratkerntemperatur von 22-28 °C oder weniger, einer relativen Luftfeuchte im Raum von mindestens 88% und einem CO₂ - Partialdruck im Raum von max. 0,03 bar.

2. Verfahren nach Anspruch 1, **dadurch gekennzeichnet, dass** als pflanzlicher Rohstoff gehäckseltes Stroh, Sägemehl, Holzspäne, zerkleinerte Baumrinde, zerkleinerte Maisspindeln, Getreidespelzen und/oder ein anderer pflanzlicher Rohstoff mit einem entsprechenden Anteil an Lignocellulose und Hemicellulose eingesetzt wird.

3. Verfahren nach einem oder mehreren der Ansprüche 1 bis 2, **dadurch gekennzeichnet, dass** die Suspension im Schritt e) bei einer Temperatur von 70 bis 99 °C, bevorzugt 85 bis 95 °C, über eine Zeitspanne bevorzugt von 10 bis 30 min konditioniert wird.

4. Verfahren nach einem oder mehreren der Ansprüche 1 bis 3, **dadurch gekennzeichnet, dass** als Additive in Schritt j) Nährsalze, bevorzugt MnSO₄, und/oder pH-Puffersubstanzen, bevorzugt CaMg(CO₃)₂, eingesetzt werden.

5. Verfahren nach einem oder mehreren der Ansprüche 1 bis 4, **dadurch gekennzeichnet, dass** in Schritt i) ein mit Mycel der Pilz-Reinkultur durchwachsener Holzstab, eine auf Getreide befindliche Pilz-Reinkultur (Hirse, Roggen o.ä.) oder eine wässrige Suspension der Pilz-Reinkultur eingesetzt wird.

6. System zur Durchführung des Verfahrens gemäß einem oder mehreren der Ansprüche 1 bis 5, umfassend
a) einen beheizbaren Behälter, ausgelegt zum Vermischen des pflanzlichen Rohstoffs mit Wasser um auf dem Rohstoff befindliches Mikrobiom zu aktivieren,
b) einen beheizbaren Behälter zum Suspendieren des pflanzlichen Rohstoffs mit aktiviertem Mikrobiom in Wasser,
c) einen beheizbaren Behälter, ausgelegt für einen Betriebsdruck von 2 bar, zur Sterilisierung der Suspension,
d) einen Filter mit Scheidepresse zum kontinuierlichen Abtrennen von Wasser,
f) eine Vorrichtung zum Zurückführen des Filtrats in den Behälter b) zum Suspendieren des pflanzlichen Rohstoffs,
g) mindestens eine kontinuierlich arbeitende Vorrichtung zum Abziehen von weiterem Wasser unter vermindertem Druck, sowie ein Kondensator mit Vakuumpumpe und ein/zwei vakuumfeste(r) Behälter, der/die als Pufferspeicher ausgeführt wird/werden,
h) eine Vorrichtung zum Inokulieren des aus der Vorrichtung g) geförderten Steril-Substrates mit Pilz-Reinkulturen und gegebenenfalls Hinzufügen von Additiven zur Förderung des Pilzwachstums und eine Dosier-Vorrichtung für Wasser um einen Wassergehalt des Substrats von 56 bis 69 Gew.-% im Steril-Substrat zu erreichen,
i) eine Vorrichtung zum Portionieren und Verpacken des mit den Pilz-Reinkulturen inokulierten Steril-Substrates in keimfreier Umgebung,
j) und Fermentationsräume mit einer prozesslufttechnischen Anlage für das vegetative Wachstum des Pilzes im Steril-Substrat.

7. System nach Anspruch 6, **dadurch gekennzeichnet, dass** der Behälter zur Sterilisierung des pflanzlichen Rohstoffs, einen ersten Doppelrohr-Apparat zu Rückkühlzwecken und einen zweiten Doppelrohr-Apparat zur weiteren Temperatureinleitung auf Sterilisationsniveau, sowie einen beheizbaren Druckbehälter für die Haltezeit umfasst.

8. System nach Anspruch 6, **dadurch gekennzeichnet, dass** der Filter zum kontinuierlichen Abtrennen von Wasser (Vorrichtung d)) eine Filter-, Schnecken- oder Walzenpresse oder ein Druckdrehfilter ist.

9. System nach einem oder mehreren der Ansprüche 6 bis 8, **dadurch gekennzeichnet, dass** die gesamte Anlage mit einer Prozessleittechnik automatisiert ist.

## Claims

1. Continuous process for producing sterile substrate for solid state fermentation with fungi with the steps:
a) providing a vegetable raw material which consists of at least 40% by weight, based on its dry weight, of lignocellulose and hemicellulose, the raw material being formed from particles with an average size of less than 10 mm,
b) mixing the plant raw material with water to form a mass with a solids content of 40 to 75% by weight,
c) heating and mixing the water-containing mass from step b) for at least 3 hours at a temperature of 30 to 50° C in order to activate the microbiome present on the substrate,
d) mixing the substrate obtained in step c) with water to form a suspension with a solids content of 5 to 15% by weight,
e) heating the suspension from step d) to a temperature of 70 to 99°C at atmospheric pressure for a period of 5 to 60 minutes in order to condition the solid/raw material in the suspension (swell, pasteurize),
f) the suspension from step e) is then subjected to a comminution and mechanical pulping process and pumped through two double-pipe apparatus and a pressure vessel,
g) heating the suspension from step f) in a continuous process to 100 to 121 °C at up to 2 bar pressure, holding at these conditions for 10 to 30 minutes, then recooling in countercurrent to below 100°C,
h) separating the water from the recooled suspension using a continuously operating filter device, whereby a sterile substrate with a solids content of 30 to 50% by weight is obtained and returning the water separated in step g) to step d),
i) evaporating water from the substrate obtained in step h) at a reduced pressure of 20 to 100 mbar until the substrate has a water content of 45 to 55% by weight, based on the total weight of the substrate,
j) inoculating the sterile substrate obtained in step i) with pure fungal cultures, optionally adding additives to promote fungal growth, cooling the substrate with water to 25°C or less and adjusting the water content in the substrate to 56 to 69% wt.
k) portioning and packaging the inoculated substrate and moving it to growing rooms, and
l) Fermentation at a substrate core temperature of 22-28°C or less, a relative air humidity in the room of at least 88% and a CO₂ partial pressure in the room of max. 0.03 bar.

2. Method according to claim 1, **characterized in that** chopped straw, sawdust, wood chips, shredded tree bark, shredded corn cobs, grain husks and/or another vegetable raw material with a corresponding proportion of lignocellulose and hemicellulose is used as the vegetable raw material.

3. Method according to one or more of claims 1 to 2, **characterized in that** the suspension in step e) is conditioned at a temperature of 70 to 99°C, preferably 85 to 95°C, over a period of time, preferably 10 to 30 minutes.

4. Method according to one or more of claims 1 to 3, **characterized in that** nutrient salts, preferably MnSO₄, and/or pH buffer substances, preferably CaMg(CO₃)₂, are used as additives in step j).

5. Method according to one or more of claims 1 to 4, **characterized in that** in step i) a wooden stick grown through with mycelium of the pure mushroom culture, a pure mushroom culture located on grain (millet, rye or similar) or an aqueous suspension of the pure fungal culture is used.

6. System for carrying out the method according to one or more of claims 1 to 5, comprising
a) a heatable container in which the plant raw material is mixed with water in order to activate the microbiome on it,
b) a heatable container for suspending the plant raw material with activated microbiome in water,
c) a heatable container, designed for an operating pressure of 2 bar, to sterilize the suspension,
d) a filter with a separating press for the continuous separation of water,
f) a device for returning the filtrate to the container b) for suspending the vegetable raw material,
g) at least one continuously operating device for drawing off additional water under reduced pressure, as well as a condenser with a vacuum pump and one or two vacuum-tight containers, which are designed as buffer storage,
h) a device for inoculating the sterile substrate conveyed from the device g) with pure fungal cultures and, if necessary, adding additives to promote fungal growth and a metering device for water to ensure and achieve a water content of the substrate of 56 to 69% by weight.
i) a device for portioning and packaging the sterile substrate inoculated with the pure fungal cultures in a germ-free environment,
j) and fermentation rooms with a process air system for the vegetative growth of the fungus in the sterile substrate.

7. System according to claim 6, **characterized in that** the container for sterilizing the plant raw material comprises a first double-tube apparatus for recooling purposes and a second double-tube apparatus for further introduction of temperature to the sterilization level, as well as a heatable pressure vessel for the holding time.

8. System according to claim 6, **characterized in that** the filter for the continuous separation of water (device d) is a filter, screw or roller press or a pressure rotary filter.

9. System according to one or more of claims 6 to 8, **characterized in that** the entire system is automated using process control technology.

## Revendications

1. Procédé continu de production de substrat stérile pour fermentation substrat solide avec des champignons avec les étapes:
a) fournir une matière première végétale qui est constituée d'au moins 40% en poids, par rapport à son poids sec, de lignocellulose et d'hémicellulose, la matière première étant formée de particules d'une taille moyenne inférieure à 10 mm,
b) mélanger la matière première végétale avec de l'eau pour former une masse ayant un extrait sec de 40 à 75% en poids,
c) chauffer et mélanger la masse contenant de l'eau issue de l'étape b) pendant au moins 3 heures à une température de 30 à 50°C afin d'activer le microbiome présent sur le substrat,
d) mélanger le substrat obtenu à l'étape c) avec de l'eau pour former une suspension ayant un extrait sec de 5 à 15% en poids,
e) chauffer la suspension issue de l'étape d) à une température de 70 à 99°C à pression atmosphérique pendant une période de 5 à 60 min pour conditionner le solide/matière première dans la suspension (gonfler, pasteuriser),
f) la suspension issue de l'étape e) est ensuite soumise à un processus de broyage et de rupture mécanique et pompée à travers deux appareils à double tube et un récipient sous pression,
g) chauffer la suspension issue de l'étape f) dans un processus continu jusqu'à 100 à 121 °C jusqu'à 2 bars de pression, maintenir dans ces conditions pendant 10 à 30 minutes, puis refroidir à contre-courant jusqu'en dessous de 100°C,
h) séparer l'eau de la suspension refroidie à l'aide d'un dispositif de filtration fonctionnant en continu, obtenant un substrat stérile ayant une teneur en matières solides de 30 à 50% en poids et recycler l'eau séparée à l'étape g) vers l'étape d),
i) évaporer l'eau du substrat obtenu à l'étape h) sous une pression barométrique absolue de 20 à 100 mbar jusqu'à ce que le substrat ait une teneur en eau de 45 à 55% en poids, par rapport au poids total du substrat,
j) Inoculation du substrat stérile obtenu à l'étape i) avec des cultures fongiques pures, en ajoutant éventuellement des additifs pour favoriser la croissance fongique, en refroidissant le substrat avec de l'eau à 25°C ou moins et en ajustant la teneur en eau dans le substrat entre 56 et 69% en poids,
k) portionnement et conditionnement du substrat inoculé et mise en salle de culture, et
l) Fermentation à une température à coeur du substrat de 22-28°C ou moins, une humidité relative dans la pièce d'au moins 88 % et une pression partielle de CO₂ dans la pièce de 0,03 bar maximum.

2. Procédé selon la revendication 1, **caractérisé en ce que** l'on utilise comme matière première végétale de la paille hachée, de la sciure de bois, des copeaux de bois, de l'écorce d'arbre broyée, des épis de maïs broyés, des cosses de céréales et/ou une autre matière première végétale avec une proportion correspondante de lignocellulose et d'hémicellulose.

3. Procédé selon une ou plusieurs des revendications 1 à 2, **caractérisé en ce que** la suspension à l'étape e) est conditionnée à une température de 70 à 99°C, de préférence de 85 à 95°C, pendant une durée de préférence de 10 à 30 minutes.

4. Procédé selon une ou plusieurs des revendications 1 à 3, **caractérisé en ce que** des sels nutritifs, de préférence MnSO₄, et/ou des substances tampons de pH, de préférence CaMg(CO₃)₂, sont utilisés comme additifs dans l'étape j).

5. Procédé selon une ou plusieurs des revendications 1 à 4, **caractérisé en ce qu'**à l'étape i) on cultive du mycélium de culture fongique pure sur un bâton de bois, une culture pure fongique située sur des céréales (mil, seigle, etc.) ou un mélange aqueux une suspension de culture fongique pure est utilisée.

6. Système pour mettre en oeuvre le procédé selon une ou plusieurs des revendications 1 à 5, comprenant:
a) un récipient chauffant dans lequel la matière première végétale est mélangée à de l'eau afin d'activer le microbiome qui s'y trouve,
b) un récipient chauffant pour mettre en suspension la matière première végétale avec un microbiome activé dans l'eau,
c) un récipient chauffant, conçu pour une pression de fonctionnement de 2 bars, pour stériliser la suspension,
d) un filtre avec une presse séparatrice pour la séparation continue de l'eau,
f) un dispositif de renvoi du filtrat vers le récipient b) de mise en suspension de la matière première végétale,
g) au moins un dispositif fonctionnant en continu pour prélever de l'eau supplémentaire sous pression réduite, ainsi qu'un condenseur avec une pompe à vide et un ou deux réservoirs étanches au vide qui sont conçus comme stockage tampon,
h) un dispositif pour inoculer le substrat stérile transporté depuis le dispositif g) avec des cultures fongiques pures et éventuellement ajouter des additifs pour favoriser la croissance fongique et un dispositif de dosage d'eau jusqu'à une teneur en eau du substrat stérile de 56 à 69% en poids,
i) un dispositif de portionnement et de conditionnement du substrat stérile inoculé avec les cultures fongiques pures dans un environnement exempt de germes,
j) et des salles de fermentation avec un système d'air de traitement pour la croissance végétative du champignon dans le substrat stérile.

7. Système selon la revendication 6, **caractérisé en ce que** le récipient pour stériliser la matière première végétale comprend un premier appareil à double tube pour le refroidissement et un deuxième appareil à double tube pour une introduction supplémentaire de la température au niveau de stérilisation, ainsi qu'une récipient sous pression chauffable pour le temps de rétention.

8. Système selon la revendication 6, **caractérisé en ce que** le filtre pour la séparation continue de l'eau (dispositif d) est un filtre, une presse à vis ou à rouleaux ou un filtre rotatif sous pression.

9. Système selon une ou plusieurs des revendications 6 à 8, **caractérisé en ce que** l'ensemble du système est automatisé au moyen d'une technologie de commande de processus.
